(19) Europäisches Patentamt
European Patent Office
Office européen des brevets

(11) Veröffentlichungsnummer: **0 422 474 B1**

(12) **EUROPÄISCHE PATENTSCHRIFT**

(45) Veröffentlichungstag der Patentschrift: **29.11.95**

(51) Int. Cl.[6]: **C09B 67/20**, C09K 11/06, C08J 3/22

(21) Anmeldenummer: **90118762.5**

(22) Anmeldetag: **29.09.90**

(54) **Fluoreszenzpigmente.**

(30) Priorität: **11.10.89 DE 3933903**

(43) Veröffentlichungstag der Anmeldung:
**17.04.91 Patentblatt 91/16**

(45) Bekanntmachung des Hinweises auf die Patenterteilung:
**29.11.95 Patentblatt 95/48**

(84) Benannte Vertragsstaaten:
**CH DE FR GB IT LI**

(56) Entgegenhaltungen:
**EP-A- 0 033 079** **EP-A- 0 055 363**
**EP-A- 0 077 496** **EP-A- 0 118 667**
**EP-A- 0 227 980** **DE-A- 2 009 749**
**DE-A- 2 546 118** **DE-A- 3 400 991**
**FR-A- 2 289 574** **FR-A- 2 514 377**

**PATENT ABSTRACTS OF JAPAN, Band 13, Nr. 290 (C-614)[3638], 5. Juli 1989; & JP-A-1 85 308 (TOYOBO CO., LTD) 30-03-1989**

(73) Patentinhaber: **BASF Aktiengesellschaft**
**Carl-Bosch-Strasse 38**
**D-67063 Ludwigshafen (DE)**

(72) Erfinder: **Hahn, Erwin, Dr.**
**Am Buechsenackerhang 31**
**W-6900 Heidelberg (DE)**
Erfinder: **Ostertag, Werner, Dr.**
**Oberer Bergelweg 2**
**W-6718 Gruenstadt (DE)**
Erfinder: **Seybold, Guenther, Dr.**
**Friedrich-Ebert-Strasse 14**
**W-6708 Neuhofen (DE)**

EP 0 422 474 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Fluoreszenzpigmente, deren mittlere Teilchengröße 8 bis 16 µm beträgt und die unpolare Polymermatrices, ausgewählt aus der Gruppe, bestehend aus Polymethylmethacrylat, Polystyrol, mit Polybutadien modifiziertem Polystyrol, Polycarbonat, Polyvinylchlorid und Polyamid, aufweisen und einen oder mehrere unpolare Fluoreszenzfarbstoffe aus der Cumarin- oder Perylenreihe enthalten.

Aus der US-A-2 498 592 sowie der US-A-3 915 884 sind Fluoreszenzpigmente bekannt, die Farbstoffe aus der Naphthalimidreihe aufweisen und deren Polymermatrices Polykondensate auf Basis von Harnstoff und Formaldehyd oder von Polyamid darstellen.

Weiterhin beschreibt die US-A-2 938 873 Fluoreszenzpigmente, deren Farbstoffe aus der Naphthalimid- oder Cumarinreihe stammen und die als Polymermatrix Harze auf Basis von p-Toluolsulfonamid und Formaldehyd enthalten.

Es hat sich jedoch gezeigt, daß solche Fluoreszenzpigmente über ungenügende anwendungstechnische Eigenschaften, insbesondere über eine nicht ausreichende Lichtechtheit verfügen.

Aufgabe der vorliegenden Erfindung war es deshalb, neue Fluoreszenzpigmente bereitzustellen, die die genannten Nachteile nicht mehr aufweisen.

Demgemäß wurden die eingangs näher bezeichneten Fluoreszenzpigmente gefunden.

Die neuen Fluoreszenzpigmente enthalten einen oder mehrere unpolare Fluoreszenzfarbstoffe aus der Cumarin- oder Perylenreihe.

Geeignete unpolare Cumarinfarbstoffe sind beispielsweise solche, wie sie in der US-A-3 880 869 beschrieben sind. Hervorzuheben sind dabei Cumarinfarbstoffe der Formel III

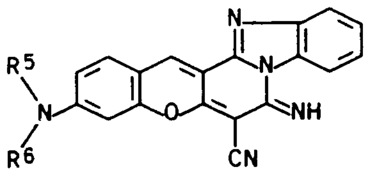

(III),

in der $R^5$ und $R^6$ gleich oder verschieden sind und unabhängig voneinander jeweils $C_1$-$C_4$-Alkyl, insbesondere Ethyl, bedeuten.

Weiterhin hervorzuheben sind Fluoreszenzpigmente, die Cumarinfarbstoffe der Formel IV

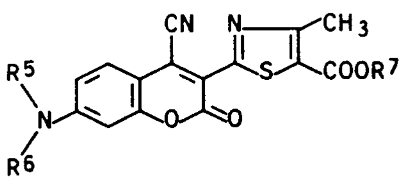

(IV)

enthalten, worin

$R^5$ und $R^6$ gleich oder verschieden sind und unabhängig voneinander jeweils $C_1$-$C_4$-Alkyl, insbesondere Ethyl, und

$R^7$ $C_1$-$C_{11}$-Alkyl bedeuten.

Geeignete unpolare Perylenfarbstoffe sind beispielsweise solche, wie sie in der US-A-4 618 694, DE-A-2 451 782, US-A-4 379 934, US-A-4 446 324 oder EP-A-227 980 beschrieben sind.

Weiterhin geeignete unpolare Perylenfarbstoffe sind beispielsweise solche, wie sie in der EP-A-73 007 beschrieben sind.

Bevorzugt sind Fluoreszenzpigmente, die Farbstoffe der Perylenreihe enthalten.

Hervorzuheben sind Fluoreszenzpigmente, die Perylenfarbstoffe der Formel V

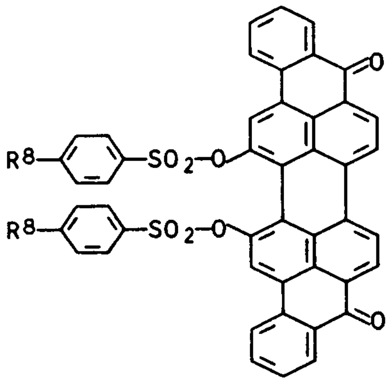

(V)

enthalten, worin $R^8$ $C_1$-$C_{13}$-Alkyl bedeutet.

Besonders bevorzugt sind Fluoreszenzpigmente, die Perylenfarbstoffe der Formel I

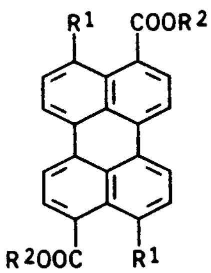

(I)

enthalten, worin

$R^1$ Wasserstoff oder Cyano und

$R^2$ $C_1$-$C_{11}$-Alkyl bedeuten.

Weiterhin besonders bevorzugt sind Fluoreszenzpigmente, die Perylenfarbstoffe der Formel II

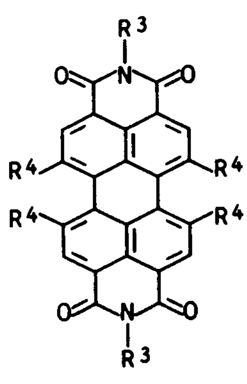

(II)

enthalten, worin

$R^3$ $C_5$-$C_{20}$-Alkyl, das gegebenenfalls durch ein Sauerstoffatom unterbrochen ist, oder Phenyl, das durch $C_1$-$C_{13}$-Alkyl oder $C_1$-$C_{13}$-Alkoxy ein- oder mehrfach substituiert ist, und

$R^4$ Wasserstoff, Chlor, Phenoxy oder durch Halogen, $C_1$-$C_4$-Alkyl oder $C_1$-$C_4$-Alkoxy substituiertes Phenoxy bedeuten.

Insbesondere bevorzugt sind Fluoreszenzpigmente, die Farbstoffe der Formel II enthalten, worin $R^3$ durch $C_1$-$C_4$-Alkyl oder $C_1$-$C_4$-Alkoxy ein- oder mehrfach substituiertes Phenyl und $R^4$ Wasserstoff, Phenoxy oder Chlor bedeuten.

Ganz besonders hervorzuheben sind Fluoreszenzpigmente, die einen Farbstoff der Formel I enthalten, worin $R^1$ jeweils Cyano und $R^2$ jeweils Butyl bedeuten.

Weiterhin ganz besonders hervorzuheben sind Fluoreszenzpigmente, die einen Farbstoff der Formel II enthalten, worin $R^3$ 2,6-Diisopropylphenyl und $R^4$ Phenoxy bedeuten.

Geeignete Reste $R^2$, $R^5$, $R^6$, $R^7$ und $R^8$ sind z.B. Methyl, Ethyl, Propyl, Isopropyl, Butyl, Isobutyl oder sec-Butyl.

Reste $R^2$, $R^7$ und $R^8$ sind weiterhin, wie auch Reste $R^3$, z.B. Pentyl, Isopentyl, Neopentyl, tert-Pentyl, Hexyl, 2-Methylpentyl, Heptyl, 1-Ethylpentyl, Octyl, 2-Ethylhexyl, Isooctyl, Nonyl, Isononyl, Decyl, Isodecyl oder Undecyl.

Reste $R^3$ und $R^8$ sind weiterhin z.B. z.B. Dodecyl, Tridecyl oder Isotridecyl.

Reste $R^3$ sind weiterhin z.B. Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Isopropoxypropyl, 2- oder 3-Butoxypropyl, 2- oder 3-(2-Ethylhexyloxy)propyl, 2- oder 4-Methoxybutyl, 2- oder 4-Ethoxybutyl, 2- oder 4-Propoxybutyl, 2- oder 4-Isopropoxybutyl, 2- oder 4-Butoxybutyl, 2- oder 4-(2-Ethylhexyloxy)butyl, 2-Methyl-6-isopropylphenyl, 2-Methyl-6-sec-butylphenyl, 2-Methyl-6-tert-butylphenyl, 2-Ethyl-6-isopropylphenyl, 2-Ethyl-6-sec-butylphenyl, 2-Ethyl-6-tert-butylphenyl, 2-Methylphenyl, 2,3-, 2,4-, 2,5- oder 2,6-Dimethylphenyl, 2,4,6-Trimethylphenyl, 2-Methyl-4-methoxyphenyl, 2,5-Dimethyl-4-methoxyphenyl, 2-Ethylphenyl, 2,6-Diethylphenyl, 2,6-Diethyl-4-methylphenyl, 2-Isopropylphenyl, 2,4-, 2,5- oder 2,6-Diisopropylphenyl, 2-n-Butylphenyl, 2-sec-Butylphenyl, 2-n-Pentylphenyl, 2-n-Hexylphenyl, 2-(2-Methylpentyl)phenyl, 2-n-Octylphenyl, 2-Methoxyphenyl, 2-Ethoxyphenyl, 2,5-Dimethoxyphenyl, 2,5-Diethoxyphenyl, 2,4-Dimethoxyphenyl, 2,4-Diethoxyphenyl, 2,3-Dimethoxyphenyl oder 2,3-Diethoxyphenyl.

Reste $R^4$ sind z.B. 2-, 3- oder 4-Fluorphenoxy, 2-, 3- oder 4-Chlorphenoxy, 2-, 3- oder 4-Bromphenoxy, 2-, 3- oder 4-tert-Butylphenoxy, 2-Isopropyl-4-methylphenoxy, 2,3-, 2,4-, 2,5- oder 2,6-Dichlorphenoxy, 2,4,5- oder 2,4,6-Trichlorphenoxy, 2-, 3- oder 4-Methylphenoxy, 2,3-, 2,4-, 2,5-, 2,6- oder 3,5-Dimethylphenoxy, 2,5,6-Trimethylphenoxy, 2-Methyl-4-chlorphenoxy, 2-Methyl-5-chlorphenoxy, 2-Methyl-6-chlorphenoxy, 2-Ethylphenoxy, 2,6-Diethylphenoxy, 2,6-Diethyl-4-methylphenoxy, 2-Isopropylphenoxy, 3-Methyl-4-chlorphenyl, 4-Propylphenoxy, 4-Butylphenoxy, 2-, 3- oder 4-Methoxyphenoxy, 2-, 3- oder 4-Ethoxyphenoxy, 2-, 3- oder 4-Propoxyphenoxy, 2-, 3- oder 4-Isopropoxyphenoxy, 2-, 3- oder 4-Butoxyphenoxy oder 2,4-Dimethoxyphenoxy.

Die erfindungsgemäßen Fluoreszenzpigmente weisen unpolare Polymermatrices, ausgewählt aus der Gruppe, bestehend aus Polymethylmethacrylat, Polystyrol, mit Polybutadien modifiziertem Polystyrol, Polycarbonat, Polyvinylchlorid und Polyamid, auf.

Bevorzugt sind dabei solche Fluoreszenzpigmente, die Polymermatrices aus Polymethylmethacrylat oder Polystyrol aufweisen.

Die genannten Polymermatrices sind an sich bekannt und handelsüblich.

Der Gehalt an Fluoreszenzfarbstoff in den erfindungsgemäßen Fluoreszenzpigmenten liegt im allgemeinen bei 1 bis 3 Gew.%, bezogen auf die Polymermatrix.

Die genannten Fluoreszenzfarbstoffe können dabei jeweils für sich oder auch als Mischungen untereinander in den neuen Fluoreszenzpigmenten enthalten sein. Ebenso können die erfindungsgemäßen Fluoreszenzpigmente nur eine der genannten Polymermatrices oder auch deren Mischungen untereinander aufweisen.

Die neuen Fluoreszenzpigmente werden zweckmäßig so hergestellt, daß man zunächst den Fluoreszenzfarbstoff in die Polymermatrix, die üblicherweise als Granulat vorliegt, auf an sich bekanntem Weg, beispielsweise durch Extrusion oder Spritzgießen, einarbeitet. Bei der Extrusion hat sich die Verwendung eines Doppelschneckenextruders als besonders günstig erwiesen. Die Einarbeitung findet im allgemeinen bei einer Temperatur von 150 bis 250 °C, bei Verwendung von Polymethylmethacrylat als Polymermatrix, vorzugsweise bei 200 bis 240 °C statt.

Das bei der Einarbeitung entstehende gefärbte Kunststoffmaterial wird anschließend stranggranuliert, wobei Partikel entstehen, deren Größe in der Regel 2 bis 6 mm beträgt. Dieses Granulat wird dann weiter zerkleinert, wobei dieser Schritt vorteilhaft in einer an sich bekannten Stiftmühle durchgeführt wird. Das Granulat weist nach dieser Vorzerkleinerung eine Partikelgröße auf, die üblicherweise 0,8 bis 1,2 mm beträgt.

Da die erfindungsgemäßen Fluoreszenzpigmente eine mittlere Teilchengröße aufweisen sollen, die 8 bis 16 µm, vorzugsweise 10 bis 12 µm beträgt, ist ein weiterer Zerkleinerungsschritt notwendig, der

vorteilhaft in einer Strahlmühle vorgenommen wird. Als besonders vorteilhaft hierbei erweist sich die Verwendung einer Fließbettgegenstrahlmühle, beispielsweise eine Gegenstrahlmühle vom Typ GK-W 481 der Firma Alpine.

Die neuen Fluoreszenzpigmente eignen sich in vorteilhafter Weise zum Pigmentieren von Anstrichmitteln auf wäßriger Basis, zum Pigmentieren von Folien und Gegenständen aus Polyolefinen, z.B. Polyethylen oder Aolypropylen, oder zum Bedrucken von Fasermaterialien, z.B. von Geweben aus Polyester, Baumwolle oder Polyester-Baumwolle-Mischgewebe.

Die neuen Fluoreszenzpigmente weisen eine hohe Leuchtstärke auf und zeigen vorteilhafte anwendungstechnische Eigenschaften, z.B. eine hohe Lichtechtheit und geringe Migrationstendenz.

Die folgenden Beispiele sollen die Erfindung näher erläutern. Dabei steht die Abkürzung PMMA für Polymethylmethacrylat.

Beispiel 1

10 g 3,9-Bis(isobutoxycarbonyl)-4,10-dicyanoperylen wurden in 1 kg PMMA-Granulat nach bekannter Technologie durch Extrusion in einem Doppelschneckenextruder bei 210 °C eingearbeitet und das entstehende Material stranggranuliert. Dieses Produkt, das eine Partikelgröße von 4 mm in der längsten Dimension aufweist, wurde in einer Stiftmühle vorzerkleinert.

Das Granulat wies nach der Vorzerkleinerung eine mittlere Partikelgröße von 1 mm auf.

Das vorzerkleinerte Granulat wurde in eine Fließbettgegenstrahlmühle (Gegenstrahlmühle vom Typ GK-W 481 der Firma Alpine) mit horizontal angeordnetem Sichterrad gegeben. Die Betriebsbedingungen der mit gasförmigem Stickstoff betriebenen Anlage waren:

| | |
|---|---|
| Sichterrad: | 6700 U/min |
| Gasdruck an den Düsen: | 4 bar |
| Spülluft Welle: | 0,45 bar |
| Spülluft Motor: | 0,5 bar |

Das erhaltene Produkt zeigte einen leuchtend hellgelben Farbton. Cilas granulometrische Partikelgrößenbestimmung ergab eine mittlere Partikelgröße von 11,7 µm (Volumenverteilung).

Beispiel 2

20 g des Fluoreszenzfarbstoffs der Formel

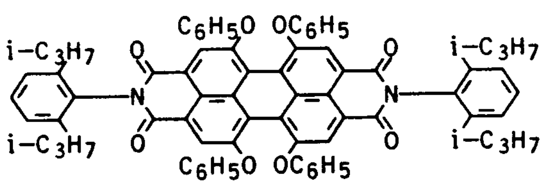

wurden, wie in Beispiel 1 beschrieben, in PMMA bei 210 °C eingearbeitet und zu einem leuchtend roten Pigmentpulver mit einer mittleren Partikelgröße von 10 µm gemahlen.

Die in der folgenden Tabelle aufgeführten Fluoreszenzfarbstoffe werden analog Beispiel 1 zu Fluoreszenzpigmenten verarbeitet.

| Bsp. Nr. | Farbstoff | Polymer-matrix | Konz.des Farbstoffs [Gew.%] | Farbe |
|---|---|---|---|---|
| 3 | 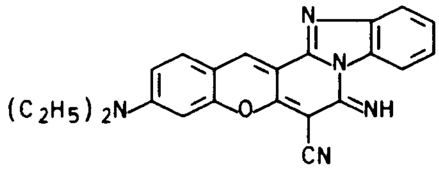 | PMMA | 2 | blau-stichig Rot |
| 4 | 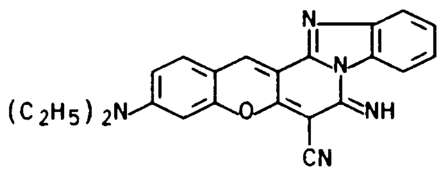 | Poly-styrol | 2 | blau-stichig Rot |
| 5 | 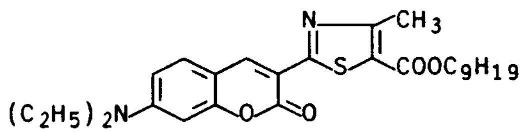 | PMMA | 2 | gelb-stichig Rot |
| 6 | 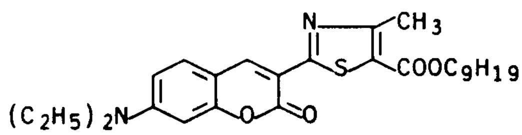 | Poly-styrol | 2 | gelb-stichig Rot |
| 7 | 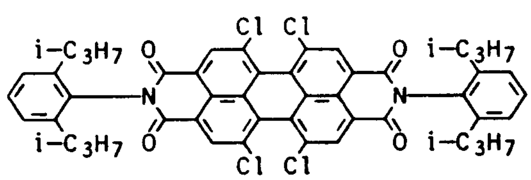 | PMMA | 2 | Orangerot |
| 8 | 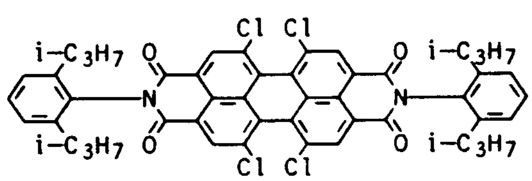 | Poly-vinyl-chlorid | 2 | Orangerot |
| 9 | 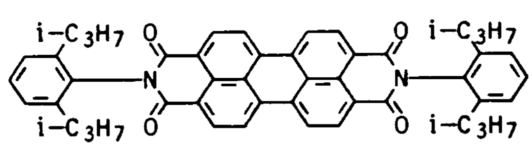 | Poly-styrol | 2 | Orange |

| Bsp. Nr. | Farbstoff | Polymermatrix | Konz. des Farbstoffs [Gew.%] | Farbe |
|---|---|---|---|---|
| 10 | 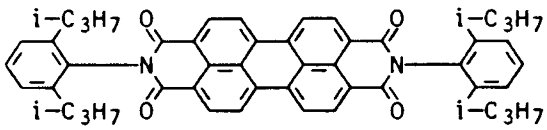 | PMMA | 2 | Orange |
| 11 | 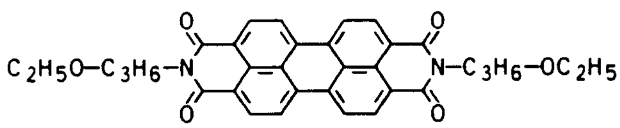 | PMMA | 3 | Orange |
| 12 | 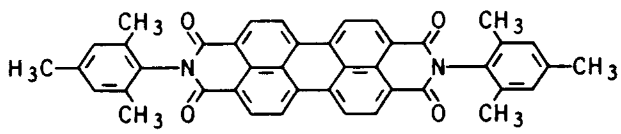 | PMMA | 2 | Orange |
| 13 | 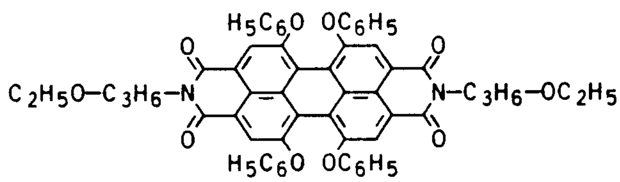 | PMMA | 2 | leuchtend Rot |
| 14 | 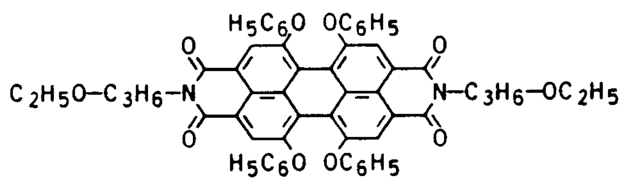 | Polystyrol | 2 | leuchtend Rot |
| 15 | 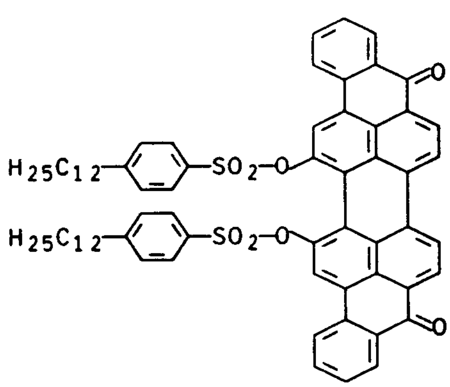 | PMMA | 3 | tief Rot |

Beispiel 16 (Anwendung)

40 g des nach Beispiel 2 hergestellten Fluoreszenzpigmentes wurden in eine Dispersion, die 760 ml Wasser, 30 g Polyacrylsäure, 30 g eines Emulgators auf Basis eines Formaldehydkondensationsproduktes

und 180 g eines Bindemittels auf Basis von Polybutadien enthielt, durch intensives Rühren eingearbeitet. Die entstehende homogene Suspension wurde auf Polyester-Baumwolle-Mischgewebe aufgedruckt und 4 Minuten bei 115°C fixiert. Man erhielt auf diese Weise einen leuchtend roten Druck, der sich durch besonders gute Waschechtheiten und hervorragende Lichtechtheit (4-5 nach der Blauskala) auszeichnet.

Beispiel 17 (Anwendung)

5 g Fluoreszenzpigment, hergestellt nach Beispiel 2, wurden zusammen mit 95 g Polyethylengranulat intensiv gemischt, extrudiert und stranggranuliert.

Mit diesem Stranggranulat wurde auf einer Folienblasmaschine eine 50 µm dicke Polyethylenfolie hergestellt, die eine Fluoreszenz bei 613 nm aufweist.

Die Folie ist geeignet zur Wachstumsförderung grüner Pflanzen. Sie zeichnet sich durch gute Lichtbeständigkeit und niedrige Farbstoffmigration aus.

## Patentansprüche

1. Fluoreszenzpigmente, deren mittlere Teilchengröße 8 bis 16 µm beträgt und die unpolare Polymermatrices, ausgewählt aus der Gruppe, bestehend aus Polymethylmethacrylat, Polystyrol, mit Polybutadien modifiziertem Polystyrol, Polycarbonat, Polyvinylchlorid und Polyamid, aufweisen und einen oder mehrere unpolare Fluoreszenzfarbstoffe aus der Cumarin- oder Perylenreihe enthalten.

2. Fluoreszenzpigmente nach Anspruch 1, dadurch gekennzeichnet, daß sie einen Farbstoff der Perylenreihe enthalten.

3. Fluoreszenzpigmente nach Anspruch 1, dadurch gekennzeichnet, daß sie einen Farbstoff der Formel I

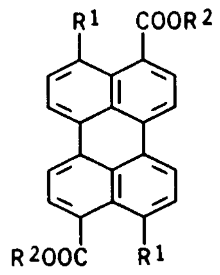

(I)

enthalten, worin
$R^1$ Wasserstoff oder Cyano und
$R^2$ $C_1$-$C_{11}$-Alkyl bedeuten.

4. Fluoreszenzpigmente nach Anspruch 1, dadurch gekennzeichnet, daß sie einen Farbstoff der Formel II

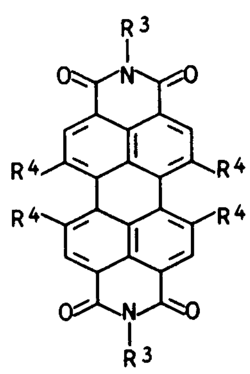

(II)

enthalten, worin

$R^3$ $C_5$-$C_{20}$-Alkyl, das gegebenenfalls durch ein Sauerstoffatom unterbrochen ist, oder Phenyl, das durch $C_1$-$C_{13}$-Alkyl oder $C_1$-$C_{13}$-Alkoxy ein- oder mehrfach substituiert ist, und

$R^4$ Wasserstoff, Chlor, Phenoxy oder durch Halogen, $C_1$-$C_4$-Alkyl oder $C_1$-$C_4$-Alkoxy substituiertes Phenoxy bedeuten.

## Claims

1. A fluorescent pigment whose mean particle size is from 8 to 16 µm, which is based on an apolar polymer matrix selected from the group consisting of polymethyl methacrylate, polystyrene, polybutadiene-modified polystyrene, polycarbonate, polyvinyl chloride and polyamide, and which contains one or more apolar fluorescent dyes of the coumarin or perylene series.

2. A fluorescent pigment as claimed in claim 1, which contains a dye of the perylene series.

3. A fluorescent pigment as claimed in claim 1, which contains a dye of the formula I

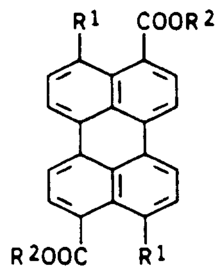

(I)

where

$R^1$ is hydrogen or cyano and

$R^2$ is $C_1$-$C_{11}$-alkyl.

4. A fluorescent pigment as claimed in claim 1, which contains a dye of the formula II

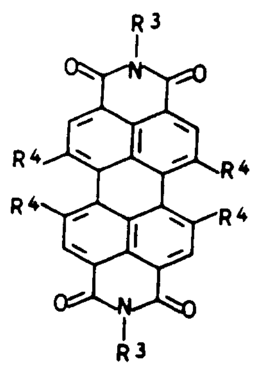

(II)

where

$R^3$ is $C_5$-$C_{20}$-alkyl which may be interrupted by an oxygen atom or is phenyl which is monosubstituted or polysubstituted by $C_1$-$C_{13}$-alkyl or $C_1$-$C_{13}$-alkoxy, and

$R^4$ is hydrogen, chlorine, phenoxy or halogen-, $C_1$-$C_4$-alkyl- or $C_1$-$C_4$-alkoxy-substituted phenoxy.

## Revendications

1. Pigments fluorescents dont la grosseur moyenne de particules est comprise entre 8 et 16 µm et qui comportent des matrices polymères homopolaires, choisies dans le groupe constitué par le polyméthacrylate de méthyle, le polystyrène le polystyrène modifié par du polybutadiène, le polycarbonate, le polychlorure de vinyle et le polyamide, et contiennent un ou plusieurs colorants fluorescents homopolaires de la série de la coumarine ou du pérylène.

**2.** Pigments fluorescents selon la revendication 1, caractérisés en ce qu'ils contiennent un colorant de la série du pérylène.

**3.** Pigments fluorescents selon la revendication 1, caractérisés en ce qu'ils contiennent un colorant de formule I

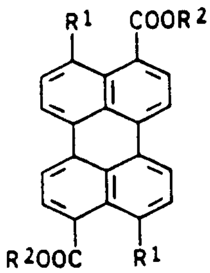

(I)

dans laquelle

$R^1$ représente un atome d'hydrogène ou un groupement cyano et

$R^2$ représente un reste alkyle en $C_1$-$C_{11}$.

**4.** Pigments fluorescents selon la revendication 1, caractérisés en ce qu'ils contiennent un colorant de formule II

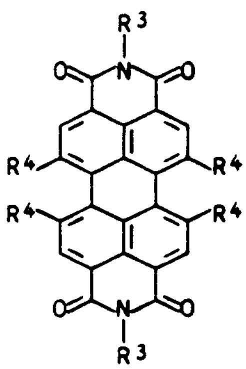

(II)

dans laquelle

$R^3$ représente un reste alkyle en $C_5$-$C_{20}$ qui est éventuellement interrompu par un atome d'oxygène, ou un reste phényle qui est substitué une ou plusieurs fois par des restes alkyle en $C_1$-$C_{13}$ ou alcoxy en $C_1$-$C_{13}$, et

$R^4$ représente un atome d'hydrogène, de chlore ou un reste phénoxy ou phénoxy substitué par un atome d'halogène ou par un reste alkyle en $C_1$-$C_4$ ou alcoxy en $C_1$-$C_4$.